# FASCICULE DE BREVET EUROPEEN

(11) **EP 2 112 019 B1**
(45) Date de publication et mention de la délivrance du brevet: **09.02.2011**
(21) Numéro de dépôt: 09157963.1
(22) Date de dépôt: 15.04.2009
(51) Int. Cl.: B60Q 1/00, B60S 1/50

(54) **Support pour accessoire de véhicule automobile, et bloc optique équipé d'un tel support.**
Halterung für ein Zubehörteil eines Kraftfahrzeugs und mit einer solchen Halterung ausgestattete Scheinwerfereinheit
Support for an automobile accessory, and optical unit equipped with such a support

(30) Priorité: 23.04.2008 FR 0802273
(43) Date de publication de la demande: 28.10.2009
(73) Titulaire: VALEO VISION, 93012 Bobigny Cedex (FR); PEUGEOT CITROËN AUTOMOBILES S.A., 78140 Vélizy Villacoublay (FR)
(72) Inventeur: Baert, Christophe, 49460 Montreuil-Juigne (FR); Hemon, Julien, 49100 Angers (FR); Bore, Michaël, 25200 Montbeliard (FR)
(74) Mandataire: Michardière, Bernard

(56) Documents cités:
- EP-A1- 2 019 007
- WO-A-2007/100662
- WO-A-2008/012643
- DE-A1- 10 311 805
- DE-A1- 19 833 465
- DE-U1- 8 604 571
- FR-A- 2 894 221
- US-A- 5 997 082

## Description

L'invention est relative à un support pour accessoire de véhicule automobile permettant de faire porter ledit accessoire par une pièce de référence fixe dans le véhicule.

Pour offrir au conducteur et aux passagers d'un véhicule automobile un volume maximal d'habitacle, la tendance est à réduire le plus possible le volume réservé aux organes du véhicule situés dans un emplacement hors de l'habitacle, soit à l'avant sous le capot, soit à l'arrière. Lorsqu'un accessoire doit être fixé dans un tel emplacement, il est souvent difficile d'assurer l'accroche de l'accessoire sur une pièce de référence fixe dans le véhicule sans augmenter l'encombrement de cette pièce et/ou sans réduire sa facilité de manipulation et d'accès.

FR 2 894 221 propose un agencement de dispositif d'essuyage d'un élément vitré délimitant un habitacle de véhicule automobile selon lequel au moins un élément du dispositif d'essuyage est porté par au moins une partie d'un projecteur du véhicule localisé à proximité de l'élément vitré. Le projecteur doit venir au voisinage de l'élément vitré, ce qui est une contrainte, et l'agencement est situé à l'extérieur de la carrosserie du véhicule. L'encombrement du support ne facilite pas un conditionnement de l'ensemble du projecteur et du support.

DE 103 11 85 montre un support rabattable à l'arrière d'un véhicule sur un dossier de siège ou sur une paroi de la carrosserie. Un tel support n'est pas prévu pour se trouver en dehors de l'habitacle du véhicule, notamment sous le capot.

C'est pourtant le cas lorsque l'accessoire est constitué par une goulotte de remplissage d'un réservoir de liquide lave-glace à implanter à l'avant du véhicule, dans le compartiment moteur sous le capot.

EP 2 019 007, qui est un document intercalaire à prendre en compte en vertu de l'article 54(3) CBE au seul titre de la nouveauté, montre un support pour accessoire de véhicule automobile, du genre qui permet de faire porter ledit accessoire par un bloc optique fixe dans le véhicule, le support étant monté rétractable sur le bloc optique, et pouvant être déplacé entre une position effacée contre le bloc optique dont l'encombrement général n'est alors pas sensiblement augmenté, et une position active où le support peut recevoir l'accessoire.

Un support selon le préambule de la revendication 1 et un bloc optique selon le préambule de la revendication 9 sont connus de FR 2 894 221.

L'invention a pour but, surtout, de fournir un support pour accessoire de ce genre qui permet de mettre facilement en place l'accessoire et d'en assurer un bon maintien, tout en évitant ou en limitant une augmentation de l'encombrement de l'ensemble du support et du bloc optique pour le conditionnement.

Selon l'invention, un support pour accessoire de véhicule automobile du genre en question, est caractérisé en ce qu'un moyen de retenue du support en position active est prévu.

De préférence, le moyen de retenue du support en position active exerce une retenue permettant néanmoins un actionnement manuel pour le passage d'une position à l'autre.

Avantageusement, le support est monté mobile en rotation autour d'un pivot porté par le bloc optique, le pivot étant sensiblement vertical lorsque le bloc optique est installé dans le véhicule.

Le support peut comprendre un bras dont l'extrémité éloignée du pivot est prévue pour recevoir l'accessoire. L'extrémité du bras éloignée de l'axe de rotation peut être en forme de pince, déformable de manière élastique pour recevoir l'accessoire.

Dans le cas d'un bloc optique qui est mis en place dans le véhicule par un mouvement de translation, avantageusement le support en position effacée s'inscrit dans le contour apparent du bloc optique suivant la direction de translation pour le montage, de manière à éviter toute interférence, lors du montage, avec le contour du logement du bloc optique.

Le support en position effacée peut libérer un accès à une bonnette donnant accès à une lampe du bloc optique. L'accessoire peut être une goulotte de remplissage d'un bocal de lave-glace.

L'invention est également relative à un bloc optique, à monter fixe dans un véhicule automobile, équipé d'un support permettant de faire porter un accessoire par ledit bloc optique, le support étant monté rétractable sur le bloc optique de manière à pouvoir être déplacé entre une position effacée contre le bloc optique dont l'encombrement général n'est alors pas sensiblement augmenté, et une position active où le support peut recevoir l'accessoire, ce bloc optique étant caractérisé en ce que le support comprend un bras monté mobile en rotation autour d'un pivot porté par le bloc optique, et qu'un logement est prévu sur le boîtier du bloc optique pour coopérer avec un ergot faisant saillie sous le bras pour retenir le bras en position active.

Généralement, un moyen de retenue du support dans chaque position est prévu, la retenue exercée pouvant être surmontée manuellement pour le passage d'une position à l'autre. Le moyen de retenue du support dans chaque position peut être constitué par un clippage, c'est-à-dire un enclenchement, avec retenue physique selon la même direction que celle d'arrivée de l'accessoire.

Le support est avantageusement monté mobile en rotation autour d'un pivot sensiblement vertical lorsque le bloc optique est installé dans le véhicule.

L'extrémité du bras éloignée du pivot est prévue pour recevoir l'accessoire, cette extrémité étant en forme de pince, déformable de manière élastique, pour recevoir et serrer l'accessoire.

L'invention consiste, mises à part les dispositions exposées ci-dessus, en un certain nombre d'autres dispositions dont il sera plus explicitement question ci-après à propos d'un exemple de réalisation décrit avec référence aux dessins annexés, mais qui n'est nullement limitatif. Sur ces dessins :
Fig.1 est une vue de dessus, avec parties arrachées, d'un bloc optique côté droit de véhicule automobile, équipé d'un support pour accessoire selon l'invention.
Fig.2 est une vue partielle, simplifiée, de dessus du bloc optique droit installé à l'avant du véhicule, avec le support, mais sans l'accessoire.
Fig.3 est une vue semblable à Fig.2 avec le support en position active et l'accessoire en place.
Fig.4 est une vue partielle, de l'arrière, du bloc optique droit mis en place dans le véhicule, avec le support en position effacée.
Fig.5 montre, semblablement à Fig.4, le bloc optique droit en place avec le support en position active, mais sans l'accessoire, et
Fig.6 illustre, en vue de trois-quarts arrière gauche, une opération de changement d'ampoule dans le bloc optique équipé du support d'accessoire.

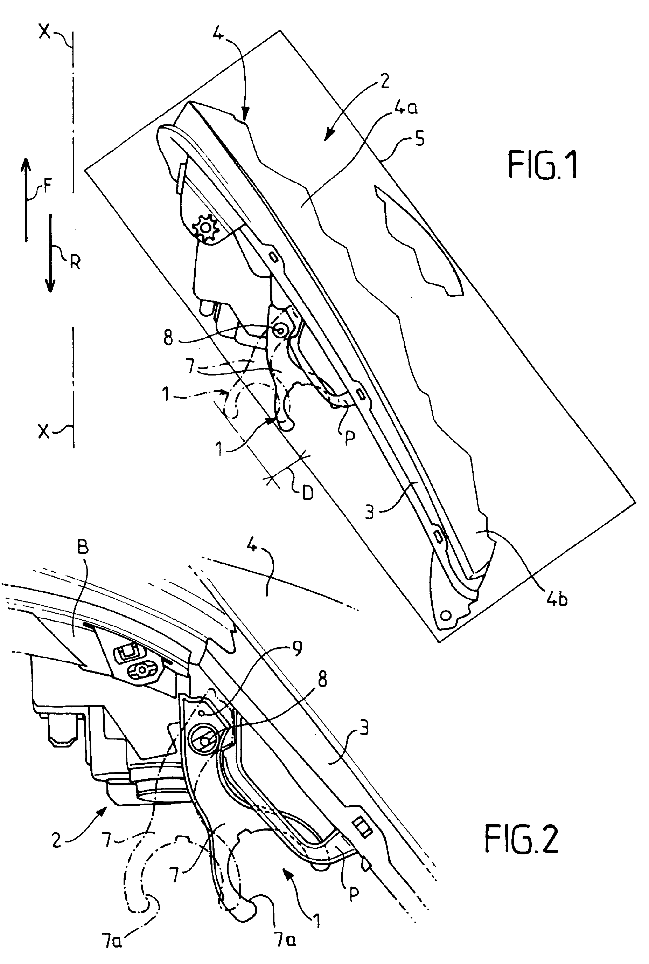

En se reportant à Fig.1 des dessins, on peut voir un support 1 pour accessoire de véhicule automobile, permettant de faire porter ledit accessoire par une pièce de référence fixe dans le véhicule. Dans l'exemple représenté la pièce de référence est constituée par un bloc optique avant 2 et, plus précisément, par le bloc optique avant côté droit du véhicule. Ce bloc optique 2 comporte un boîtier 3 généralement en matière plastique moulée, dans lequel sont prévus des logements pour les différentes sources lumineuses, et une glace 4 fermant le boîtier 3 vers l'avant et sur le côté extérieur du véhicule. La glace 4, représentée avec un arrachement central, comporte une partie 4a vers l'avant et une partie 4b vers l'arrière. Le bloc optique 2 est inscrit dans un contour rectangulaire 5, représentant le volume de référence minimum nécessaire pour emballer le projecteur.

Sur Fig.1 on a représenté une direction X-X parallèle à l'axe longitudinal du véhicule. La flèche F, parallèle à X-X, illustre le sens de progression du véhicule vers l'avant. La flèche R, parallèle à X-X, est dirigée vers l'arrière. Le bloc optique 2 est représenté, sur Fig.1, sensiblement selon l'orientation qu'il occupe dans le véhicule, relativement à la direction X-X.

La mise en place du bloc optique 2 dans un logement prévu à l'avant du véhicule du côté droit, s'effectue par un mouvement de translation, parallèle à la direction X-X. Le bloc optique 2 est engagé, suivant le sens de la flèche R, de l'avant vers l'arrière, dans son logement. Le bloc 2 est ensuite fixé à la structure du véhicule.

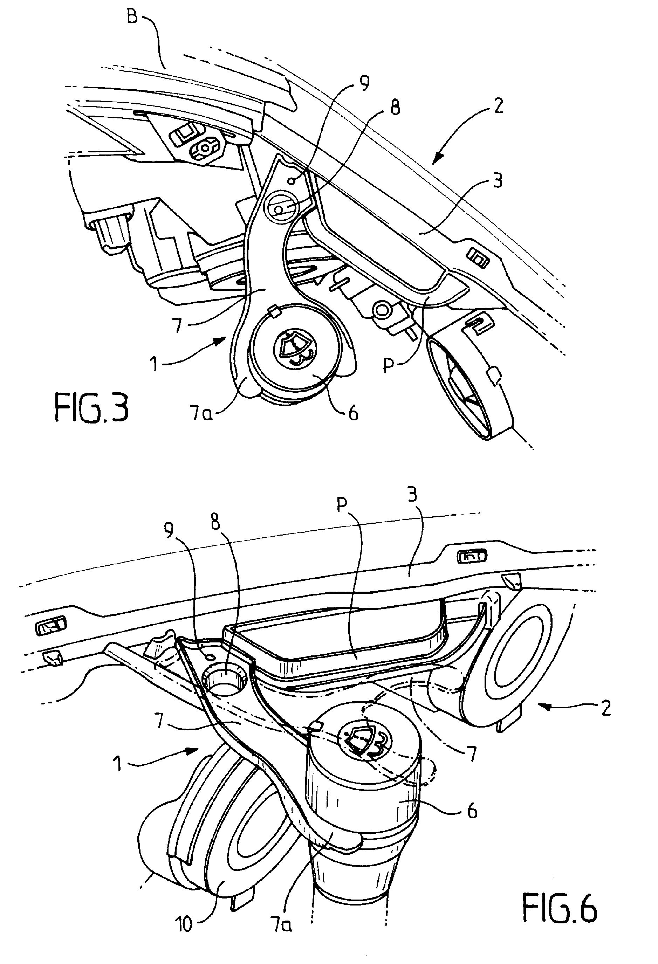

Dans l'exemple de réalisation considéré, l'accessoire à faire porter par le support 1 est une goulotte 6 (Fig. 3) de remplissage d'un bocal (non représenté) pour liquide lave-glace, notamment pour projecteur lumineux. Cet exemple d'accessoire n'est pas limitatif. Selon d'autres modes de réalisation, non représentés, on pourrait utiliser un porte-accessoire selon la présente invention pour porter un connecteur, un faisceau électrique dans le cadre d'un dispositif d'éclairage ou de signalisation pour véhicule.

Le support 1 peut être déplacé entre une position effacée, représentée en trait plein sur Fig.1 contre le boîtier 3 du bloc optique 2, et une position active représentée en trait mixte sur Fig.1, où le support peut recevoir l'accessoire.

Dans la position effacée du support 1, l'encombrement général du bloc optique 2 n'est pas sensiblement augmenté, le support 1 s'inscrivant dans le contour rectangulaire 5. Il en résulte une économie en terme de volume de conditionnement du bloc optique, ou plus généralement de la pièce de référence, servant au montage du support 1.

Par contre, dans la position active, le support 1 s'étend au-delà du contour 5 sur une distance D, ce qui provoquerait une augmentation de l'encombrement d'une boîte d'emballage du bloc optique si le support ne pouvait être placé dans une position effacée.

Le support 1 comprend un bras 7 monté mobile en rotation autour d'un pivot 8 porté par le bloc optique 2. Le pivot 8 est prévu sur la partie supérieure du boîtier 3 du bloc optique. Lorsque le bloc optique est installé dans le véhicule, le pivot 8 est sensiblement vertical. Cet exemple n'est pas limitatif, et le pivot pourrait avoir une autre orientation. De même, le déplacement du bras 7 en rotation n'est pas limitatif ; le bras pourrait être monté rétractable en translation.

Un moyen de retenue du bras 7 dans chaque position effacée ou active est prévu. La retenue exercée est suffisante pour maintenir le bras en position mais permet néanmoins l'actionnement manuel pour le passage d'une position à l'autre. Le moyen de retenue est avantageusement constitué par un clippage, ou enclenchement, obtenu notamment avec un ergot 9 faisant saillie sous le bras 7 du côté du pivot 8 opposé à la goulotte 6, l'ergot étant symboliquement représenté en figures 2, 3 et 6 par un petit cercle référencé 9. Cet ergot 9 vient coopérer, dans chaque position, avec un logement (non visible) prévu sur le boîtier 3 du bloc optique.

Le maintien dans la position effacée ou rabattue, proche du bloc optique 2, est prévu pour permettre une manipulation aisée quelle que soit l'orientation ou l'environnement du bloc optique. Le support formé par le bras 7 doit être maintenu dans la position effacée tant que la fixation de l'accessoire n'est pas prête à être réalisée. La retenue en position effacée est prévue pour permettre néanmoins un actionnement manuel pour le passage vers la position active. De préférence, l'effort de rétention dans la position effacée, suivant la direction de sortie, est comprise entre 5 et 10 N (Newtons).

Le choix de l'orientation du pivot de rotation 8 prend en compte plusieurs facteurs à savoir :
- l'emplacement spatial nécessaire pour le bras 7 dans la position active pour la fixation de l'accessoire ;
- l'emplacement spatial voulu du bras 7 en position effacée pour réduire le volume global ;
- la facilité d'accès au bras 7 et aux bonnettes 10, ainsi que la facilité de manoeuvre du bras 7 ;
- direction des efforts appliqués par la suite sur le support, notamment lorsque l'accessoire est en place ; de préférence la direction de déplacement du support, de la position effacée vers la position active ou inversement, n'est pas parallèle à la direction des efforts exercés sur l'accessoire lorsqu'il est porté par le bras 7, de façon à réduire les risques de déverrouillage du bras en position active.

Le maintien dans la position active est défini en fonction de différents facteurs. On privilégiera néanmoins un clippage avec retenue physique dans la même direction que celle d'arrivée du support dans la position active, l'effort de clippage étant tel que ce clippage pourra être effectué aisément à la main. L'effort de rétention sera fonction de l'accessoire à maintenir, la goulotte 6 dans l'exemple considéré.

Comme indiqué précédemment, le bloc optique avant 2 est mis en place dans le véhicule par un mouvement de translation d'avant en arrière suivant le sens R. Cette mise en place est facilitée par la présence d'une poignée P sur le bloc optique.

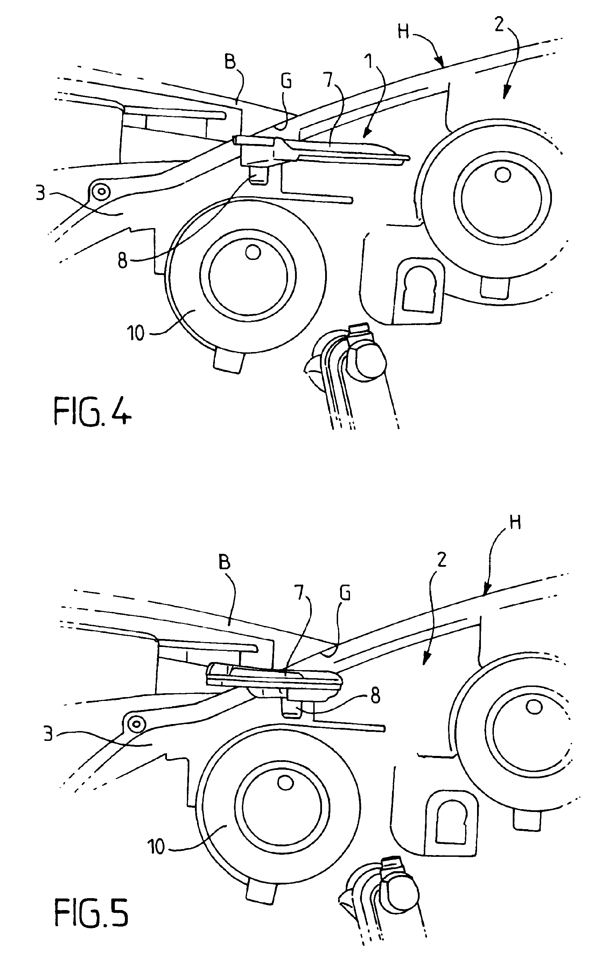

En vue suivant la direction X-X, sur les Fig.4 et 5 (c'est-à-dire selon une direction perpendiculaire au plan des Fig. 4 et 5), le passage offert au bloc optique pour sa mise en place est délimité en partie par un contour G de la calandre B. Le contour apparent extérieur H (Fig. 4 et 5) du bloc optique 2 doit donc pouvoir s'engager dans le contour G de la calandre. Selon l'invention, le bras 7 dans sa position effacée (voir Fig.4) s'inscrit essentiellement à l'intérieur du contour H de manière à éviter toute interférence, lors du montage, avec le contour G du passage réservé dans le véhicule pour le bloc optique 2 .

Si le bras 7 se trouvait dans la position active illustrée sur Fig.5 pour le montage du bloc optique dans le véhicule, il y aurait interférence de ce bras 7 avec l'environnement des éléments du véhicule, notamment avec la calandre B.

L'extrémité du bras 7 éloignée du pivot de rotation 8 est avantageusement réalisée en forme de pince 7a à deux branches formant un C. Les branches de la pince 7a sont déformables de manière élastique pour recevoir et serrer la goulotte 6 cylindrique.

Comme illustré sur Fig.6, dans la position active du bras 7 la goulotte 6 peut se trouver en arrière d'une bonnette 10, en forme de disque, et donnant accès à un porte-lampe du bloc optique 2. Il peut arriver que la lampe du bloc optique doive être remplacée, auquel cas il faut démonter la bonnette 10. Ce démontage pourrait être gêné par la présence de la goulotte 6.

Selon l'exemple de réalisation représenté sur les dessins, la pince 7a prolonge le bras 7 du support 1 dans son plan. En variante la pince pourrait être disposée dans un plan perpendiculaire au bras 7 du support 1.

Grâce à l'invention, il est possible de dégager la goulotte 6 de la pince 7a et de faire passer le bras 7 dans la position effacée représentée en trait mixte sur Fig. 6. La goulotte 6 est maintenue écartée transversalement de la bonnette 10, laquelle peut être démontée aisément pour le remplacement de la lampe.

Le bloc optique 2 considéré était un bloc situé à l'avant du véhicule. Un bloc situé à l'arrière pourrait également servir de pièce de référence pour supporter un accessoire.

## Revendications

1. Support (1) pour accessoire de véhicule automobile, permettant de faire porter ledit accessoire par un bloc optique (2) fixe dans le véhicule, **caracterisé en ce que** le support peut être monté rétractable sur le bloc optique (2), et peut être déplacé entre une position effacée contre le bloc optique dont l'encombrement général n'est alors pas sensiblement augmenté, et une position active où le support (1) peut recevoir l'accessoire (6), et **en ce qu'**un moyen de retenue (9) du support (1) en position active est prévu.

2. Support selon la revendication 1, **caractérisé en ce que** le moyen de retenue (9) du support en position active exerce une retenue permettant néanmoins un actionnement manuel pour le passage d'une position à l'autre.

3. Support selon la revendication 1 ou 2, **caractérisé en ce qu'**il peut être monté mobile en rotation autour d'un pivot (8) porté par le bloc optique (2), le pivot (8) étant sensiblement vertical lorsque le bloc optique est installé dans le véhicule.

4. Support selon la revendication 3, **caractérisé en ce qu'**il comprend un bras (7) dont l'extrémité éloignée du pivot (8) est prévue pour recevoir l'accessoire.

5. Support selon la revendication 4, **caractérisé en ce que** l'extrémité du bras (7) éloignée de l'axe de rotation est en forme de pince (7a), déformable de manière élastique pour recevoir l'accessoire.

6. Support selon l'une quelconque des revendications précédentes, pour un bloc optique (2) qui est mis en place dans le véhicule par un mouvement de translation, **caractérisé en ce que** le support (1) en position effacée peut s'inscrire dans le contour apparent (H) du bloc optique (2) suivant la direction de translation pour le montage, de manière à éviter toute interférence, lors du montage, avec le contour du logement du bloc optique.

7. Support selon l'une quelconque des revendications précédentes, **caractérisé en ce que** le support (1) en position effacée peut libérer un accès à une bonnette (10) donnant accès à une lampe du bloc optique.

8. Support selon l'une quelconque des revendications précédentes, **caractérisé en ce que** l'accessoire est une goulotte (6) de remplissage d'un bocal de lave-glace.

9. Bloc optique, à monter fixe dans un véhicule automobile, équipé d'un support (1) permettant de faire porter un accessoire par ledit bloc optique, **caractérisé en ce que** le support (1) est monté rétractable sur le bloc optique (2) de manière à pouvoir être déplacé entre une position effacée contre le bloc optique dont l'encombrement général n'est alors pas sensiblement augmenté, et une position active où le support (1) peut recevoir l'accessoire (6), et **en ce que** le support (1) comprend un bras (7) monté mobile en rotation autour d'un pivot (8) porté par le bloc optique, et qu'un logement est prévu sur le boîtier du bloc optique pour coopérer avec un ergot faisant saillie sous le bras (7) pour retenir le bras en position active.

10. Bloc optique selon la revendication 9, **caractérisé en ce qu'**un moyen de retenue (9) du support dans chaque position est prévu, la retenue exercée pouvant être surmontée manuellement pour le passage d'une position à l'autre.

11. Bloc optique selon la revendication 9, **caractérisé en ce que** le support (1) est monté mobile en rotation autour d'un pivot (8) sensiblement vertical lorsque le bloc optique est installé dans le véhicule.

12. Bloc optique selon l'une quelconque des revendications 9 à 11, **caractérisé en ce que** l'extrémité (7a) du bras éloignée du pivot (8) est prévue pour recevoir l'accessoire, cette extrémité (7a) étant en forme de pince, déformable de manière élastique, pour recevoir et serrer l'accessoire.

## Claims

1. Bracket (1) for a motor vehicle accessory, enabling said accessory to be held by a fixed optical unit (2) in the vehicle, **characterized in that** the bracket can be mounted in a retractable manner on the optical unit (2) and can be moved between a retracted position against the optical unit, the general size of which is not then substantially increased, and an active position in which the bracket (1) can receive the accessory (6), and **in that** a means (9) for retaining the bracket (1) in the active position is provided.

2. Bracket according to Claim 1, **characterized in that** the means (9) for retaining the bracket in the active position exerts a retaining force that nevertheless enables manual actuation in order to move from one position to the other.

3. Bracket according to Claim 1 or 2, **characterized in that** it can be mounted such that it can rotate about a pivot (8) held by the optical unit (2), the pivot (8) being approximately vertical when the optical unit is installed in the vehicle.

4. Bracket according to Claim 3, **characterized in that** it comprises an arm (7), the end of which remote from the pivot (8) is provided to receive the accessory.

5. Bracket according to Claim 4, **characterized in that** the end of the arm (7) remote from the rotational axis is in the form of a clip (7a) which can be deformed elastically in order to receive the accessory.

6. Bracket according to any one of the preceding claims, for an optical unit (2) which is fitted in the vehicle by a movement in translation, **characterized in that** the bracket (1) in the retracted position can be inscribed in the visible contour (H) of the optical unit (2) in the direction of translation for mounting, so as to avoid any interference, during mounting, with the contour of the optical unit housing.

7. Bracket according to any one of the preceding claims, **characterized in that** the bracket (1) in the retracted position can enable access to a cap (10) that provides access to a lamp of the optical unit.

8. Bracket according to any one of the preceding claims, **characterized in that** the accessory is a filler neck (6) of a windscreen washer bottle.

9. Optical unit, intended to be mounted in a fixed manner in a motor vehicle, equipped with a bracket (1) enabling an accessory to be held by said optical unit, **characterized in that** the bracket (1) is mounted in a retractable manner on the optical unit (2) so as to be able to be moved between a retracted position against the optical unit, the general size of which is not then substantially increased, and an active position in which the bracket (1) can receive the accessory (6), and **in that** the bracket (1) comprises an arm (7) mounted such that it can rotate about a pivot (8) held by the optical unit, and **in that** a housing is provided on the casing of the optical unit in order to engage with a lug protruding under the arm (7) in order to retain the arm in the active position.

10. Optical unit according to Claim 9, **characterized in that** a means (9) for retaining the bracket in each position is provided, it being possible for the retaining force exerted to be overcome manually in order to move from one position to the other.

11. Optical unit according to Claim 9, **characterized in that** the bracket (1) is mounted such that it can rotate about a pivot (8) which is approximately vertical when the optical unit is installed in the vehicle.

12. Optical unit according to any one of Claims 9 to 11, **characterized in that** the end (7a) of the arm remote from the pivot (8) is provided to receive the accessory, this end (7a) being in the form of a clip, which can be deformed elastically, in order to receive and clamp the accessory.

## Patentansprüche

1. Halterung (1) für ein Zubehörteil eines Kraftfahrzeugs, welche es ermöglicht, das Zubehörteil mittels einer in dem Fahrzeug fest angebrachten Scheinwerfereinheit (2) zu tragen, **dadurch gekennzeichnet, dass** die Halterung zurückziehbar an der Scheinwerfereinheit (2) montierbar ist, und dass sie zwischen einer inaktiven Position in Anlage an der Scheinwerfereinheit, deren allgemeiner Platzbedarf hierdurch nicht wesentlich erhöht wird, und einer aktiven Position bewegbar ist, in welcher die Halterung (1) das Zubehörteil (6) aufnehmen kann, und dass eine Einrichtung (9) zum Zurückhalten der Halterung (1) in der aktiven Position vorgesehen ist.

2. Halterung nach Anspruch 1, **dadurch gekennzeichnet, dass** die Einrichtung (9) zum Zurückhalten der Halterung in der aktiven Position eine Zurückhaltung ausübt, die dennoch eine manuelle Betätigung für einen Übergang von der einen in die andere Position ermöglicht.

3. Halterung nach Anspruch 1 oder 2, **dadurch gekennzeichnet, dass** sie um einen von der Scheinwerfereinheit (2) getragenen Drehzapfen (8) drehbar anbringbar ist, wobei der Drehzapfen (8) bei in dem Fahrzeug eingebauter Scheinwerfereinheit im Wesentlichen vertikal ausgerichtet ist.

4. Halterung nach Anspruch 3, **dadurch gekennzeichnet, dass** sie einen Arm (7) aufweist, dessen dem Drehzapfen (8) abgewandtes Ende zum Aufnehmen des Zubehörteils vorgesehen ist.

5. Halterung nach Anspruch 4, **dadurch gekennzeichnet, dass** das der Drehachse abgewandte Ende des Arms (7) in Form einer Klemme (7a) ausgebildet ist, welche zum Aufnehmen des Zubehörteils elastisch verformbar ist.

6. Halterung nach einem der vorhergehenden Ansprüche, für eine Scheinwerfereinheit (2), welche in dem Fahrzeug durch eine Translationsbewegung eingesetzt ist, **dadurch gekennzeichnet, dass** die Halterung (1) in der inaktiven Position in Richtung der Translationsbewegung für die Montage in die sichtbare Kontur (H) der Scheinwerfereinheit (2) eingreifen kann, um bei der Montage jegliche Störung mit der Kontur der Aufnahme der Scheinwerfereinheit zu vermeiden.

7. Halterung nach einem der vorhergehenden Ansprüche, **dadurch gekennzeichnet, dass** die Halterung (1) in der inaktiven Position den Zugang zu einer Kappe (10) freigeben kann, welche den Zugang zu einer Lampe der Scheinwerfereinheit ermöglicht.

8. Halterung nach einem der vorhergehenden Ansprüche, **dadurch gekennzeichnet, dass** das Zubehörteil der Einfüllstutzen (6) eines Scheibenwaschanlagenbehälters ist.

9. Scheinwerfereinheit zur festen Montage in einem Kraftfahrzeug, versehen mit einer Halterung (1), die das Tragen eines Zubehörteils durch die Scheinwerfereinheit ermöglicht, **dadurch gekennzeichnet, dass** die Halterung (1) derart zurückziehbar an der Scheinwerfereinheit (2) anbringbar ist, dass sie zwischen einer inaktiven Position in Anlage an der Scheinwerfereinheit, deren allgemeiner Platzbedarf hierdurch nicht wesentlich erhöht wird, und einer aktiven Position bewegbar ist, in welcher die Halterung (1) das Zubehörteil (6) aufnehmen kann, und dass die Halterung (1) einen Arm (7) aufweist, welcher um einen von der Scheinwerfereinheit getragenen Drehzapfen (8) drehbar angebracht ist, und dass an dem Gehäuse der Scheinwerfereinheit eine Aufnahme vorgesehen ist, welche zum Zurückhalten des Arms in der aktiven Position mit einem unter dem Arm (7) vorstehenden Stift zusammenwirkt.

10. Scheinwerfereinheit nach Anspruch 9, **dadurch gekennzeichnet, dass** eine Einrichtung (9) zum Zurückhalten der Halterung in jeder Position vorgesehen ist, wobei die aufgebrachte Zurückhaltung für den Übergang von einer Position in die andere manuell überwindbar ist.

11. Scheinwerfereinheit nach Anspruch 9, **dadurch gekennzeichnet, dass** der Halter (1) um einen Drehzapfen (8) drehbar angebracht ist, welcher bei in dem Fahrzeug eingebauter Scheinwerfereinheit im Wesentlichen vertikal ausgerichtet ist.

12. Scheinwerfereinheit nach einem der Ansprüche 9 bis 11, **dadurch gekennzeichnet, dass** das dem Drehzapfen (8) abgewandte Ende (7a) des Arms zum Aufnehmen des Zubehörteils vorgesehen ist, und dass dieses Ende in Form einer Klemme (7a) ausgebildet ist, welche zum Aufnehmen und Klemmen des Zubehörteils elastisch verformbar ist.
